# EUROPEAN PATENT SPECIFICATION

(11) **EP 3 139 794 B1**
(45) Date of publication and mention of the grant of the patent: **07.07.2021**
(21) Application number: 15789164.9
(22) Date of filing: 07.05.2015
(51) Int. Cl.: A47C 7/36, B60N 2/68, B33Y 80/00, B60N 2/56

(54) **SEAT FRAME AS FORMED BY ADDITIVE MANUFACTURING**
DURCH GENERATIVE FERTIGUNG GEFORMTER SITZRAHMEN
OSSATURE DE SIÈGE FORMÉE PAR UN PROCÉDÉ DE FABRICATION ADDITIVE

(30) Priority: 09.05.2014 US 201461990924 P
(43) Date of publication of application: 15.03.2017
(73) Proprietor: Adient Luxembourg Holding S.à r.l., 1855 Luxembourg (LU)
(72) Inventor: WHITE, Brennon, Novi, Michigan 48375 (US); HARRIS, Mark, West Bloomfield, Michigan 48323 (US); SAKKINEN, Dan, Highland, Michigan 48357 (US); MICHALAK, Eric, Canton, Michigan 48187 (US); LAHO, Jeff, Brighton, Michigan 48116 (US)
(74) Representative: Liedhegener, Ralf
(86) International application number: PCT/US2015/029621
(87) International publication number: WO 2015/171856

(56) References cited:
- WO-A1-03/016091
- WO-A1-2008/019981
- WO-A1-2011/060219
- WO-A2-2008/131228
- CN-U- 201 951 307
- CN-U- 201 951 307
- DE-A1- 4 238 549
- DE-A1-102008 042 325
- DE-A1-102013 219 250
- DE-U1- 29 715 770
- KR-B1- 101 278 896
- US-A- 5 385 382
- US-A1- 2010 123 042
- US-A1- 2010 244 301
- US-A1- 2010 244 301
- US-B1- 6 398 300
- US-B1- 7 946 598
- None

## Description

### CROSS REFERENCE TO RELATED APPLICATIONS

### FIELD OF THE INVENTION

The present invention relates to a seat structure and a process for forming a seat structure by an additive manufacturing process.

### BACKGROUND OF THE INVENTION

Conventional seat structures are made with dozens of components that are welded, bonded or mechanically fastened together. Each component of conventional seat structure assemblies is designed to provide one or more functions. This provides conventional seat structures that are heavier than required and more complex to facilitate current production requirements. DE 4238549 A1 shows a seat frame with a thin walled structure.

### SUMMARY OF THE INVENTION

An object of the invention is provide a seat structure that is durable, high in strength and lightweight.

According to the present invention, a seat comprises a structural frame. The structural frame comprises one or more thin walled complex geometry structures. The one or more thin walled complex geometry structures comprise one or more of multiple internal channels and ribs. The one or more of multiple channels and ribs define a structure for supporting elements within the structural frame. The one or more of the multiple channels and the ribs define one or more of structural loading paths and a channel for one or more of transporting fluids and receiving one or more components.

The structural frame may be a seat back, a cushion or a combination of the seat back and the cushion. The seat back and the cushion may form a shell. A portion of the structural frame may extend from a seatback area of the seat into a seat cushion area of the seat.

According to the present invention, the structural frame comprises one or more of a seat back and a cushion frame that comprises additive manufacturing material. The one or more thin walled complex geometry structures comprises non-castable and non-machinable portions.

The structure for supporting elements within the structural frame may comprise a first component and a second component. The first component may define an interior space. The second component may be located in the interior space. The one or more thin walled complex geometry structures may comprise non-castable and non-machinable portions.

The first component may be connected to the second component via the ribs.

The first component and the second component may define the channel. The second component may comprise a second component channel.

The channel may define a fluid flow path. A wire harness may be arranged in the second component channel.

According to the present invention, a structural frame comprises a plurality of layers. Each of the layers is integrally connected to each other to form a single, one-piece frame structure. The single, one-piece frame structure comprises load support areas and non-load support areas. The load support areas comprise a greater amount of material than the non-load support areas.

According to the present invention, a process comprises providing a designed structural frame. Load and stress points of the designed structural frame are calculated. A structural frame is fabricated layer by layer based on the calculated load and stress points of the designed structural frame such that more layers of material are used in areas of the load and stress points than in areas of the structural frame that are not subject to load and stress.

The designed structural frame may be designed using topological optimization software that iteratively runs load and stress calculations to optimize a minimum amount of material to construct the structural frame.

According to the present invention, a structural frame comprises a plurality of layers that are integrally connected to form a single, one-piece frame structure. The plurality of layers comprise movable sections.

According to the present invention, a process comprises fabricating a one piece structural frame layer by layer with movable sections built into the one piece structural frame.

According to the present invention, a structural frame comprises a plurality of layers integrally connected to form a one-piece frame structure. The plurality of layers comprise embedded elements. The embedded elements define impact load areas of the one-piece frame structure.

The embedded elements may comprise one or more geometric shapes. The one or more geometric shapes may comprise one or more of gussets and darts. The one or more of the gussets and darts may comprise fusible links. The fusible links may be deformable such that the links deform when one or more of a load and a moment is applied to the links.

According to the present invention, a structural frame comprises a one-piece frame structure comprising non-homogeneous materials.

The one-piece frame structure may comprise a first frame portion and a second frame portion.

The first frame portion may define an interior first frame portion space. The second frame portion may be arranged in the interior first frame portion space.

The second frame portion may define a second frame portion channel.

The one-piece frame structure may comprise a plurality of support structures. Each of the plurality of support structures may engage the first frame portion and the second frame portion. The first frame portion may be connected to the second frame portion via the plurality of support structures.

The first frame portion and the second frame portion may define a channel for receiving a fluid. The first frame portion may comprise an opening. The opening and the channel may define a fluid flow path for delivering a fluid.

The second frame portion channel may receive one or more of electrical wires and a wire harness.

The various features of novelty which characterize the invention are pointed out with particularity in the claims annexed to and forming a part of this disclosure. For a better understanding of the invention, its operating advantages and specific objects attained by its uses, reference is made to the accompanying drawings and descriptive matter in which preferred embodiments of the invention are illustrated.

### BRIEF DESCRIPTION OF THE DRAWINGS

Figure 1 is a perspective view of a one-piece frame;
Figure 2 is a partial perspective view of the frame showing the minimum material required to support force distribution through the frame;
Figure 3 is a partial perspective view of the frame showing material required on the outside of the frame to support force distribution through the frame;
Figure 4 is a partial perspective view of the frame showing material required on the inside of the frame to support force distribution through the frame;
Figure 5 is a partial sectional view of the frame;
Figure 6 is another perspective view of the frame;
Figure 7 is a perspective view of a plurality of components that form the frame;
Figure 8 is a top view of the plurality of components of Figure 7;
Figure 9 is a cross sectional view of one of the components of Figure 7;
Figure 10 is a perspective view of a seat;
Figure 11 is a cross sectional view of the seat of Figure 10;
Figure 12 is yet another perspective view of the frame;
Figure 13 is a lower perspective view of the frame; and
Figure 14 is a perspective view of another embodiment of a frame.

### DESCRIPTION OF THE PREFERRED EMBODIMENTS

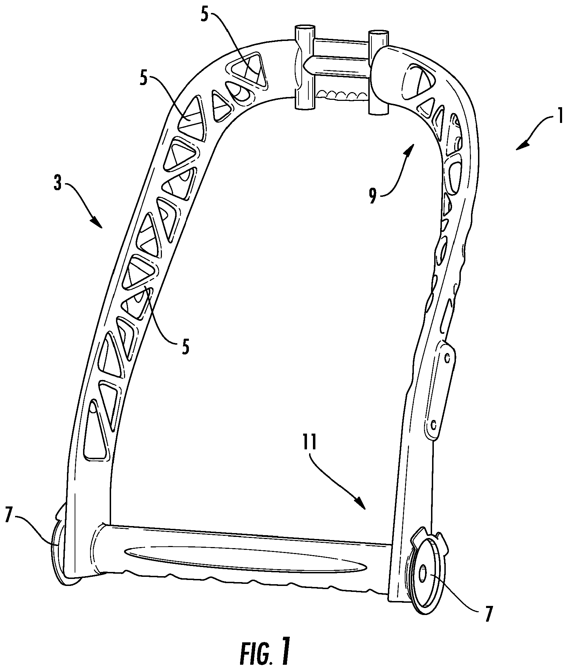

Referring to the drawings in particular, Figure 1 is a perspective view of a seat having a frame 1. The frame 1 is formed in one piece by an additive manufacturing process. The frame may be used to form a seat back structure, a seat cushion or a combination of the seat back structure and the seat cushion, which forms a shell. Figure 1 shows the frame 1 forming a part of a seat back structure. The additive manufacturing process may be a three-dimensional printing process. Plastics and/or metal alloys may be used in the three-dimensional printing process to form the frame 1. The frame 1 has a thin walled complex geometry structure 3. The thin walled complex geometry structure 3 is formed via the additive manufacturing process. The thin walled complex geometry structure 3 is not able to be formed by a casting process and the thin walled complex geometry structure 3 is not able to be formed by a machining process. The thin walled complex geometry structure 3 is formed of a very thin wall thickness. The wall thickness of the thin walled complex geometry structure 3 is 3 mm. or less, preferably 1 mm. or less. The thin walled complex geometry structure 3 includes support ribs 5. It is not possible to form the thin walled complex geometry structure 3 via a machining process since the ribs 5 are formed inside the thin walled complex structure 3.

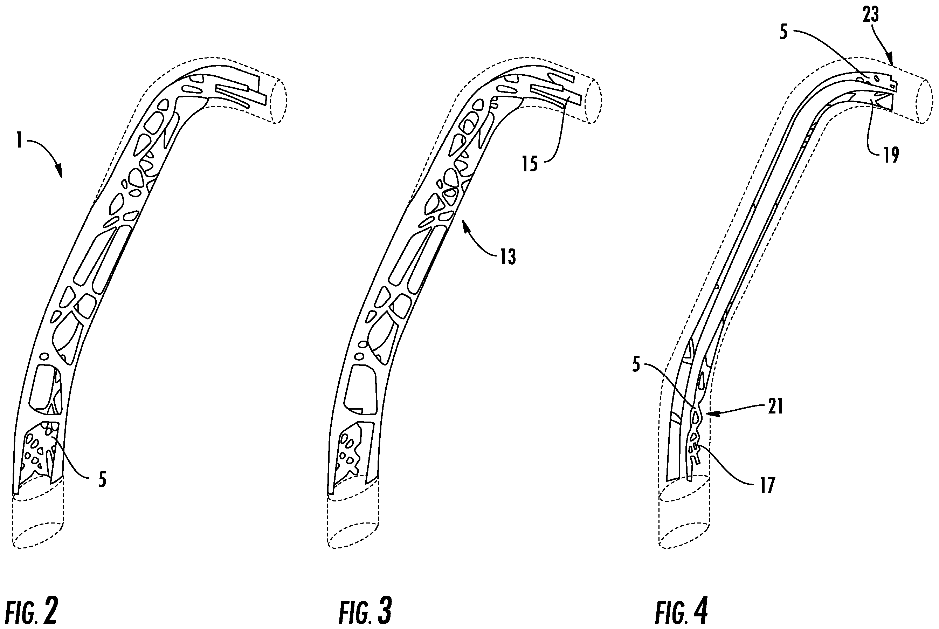

The frame 1 is formed by providing a design of the seat back structure 1. The design of the frame 1 may be formed via computer-implemented design software, such as a computer-aided design (CAD) software. The design of the frame 1 is analyzed using a topological design software to determine where material is required on the frame 1 to transfer load from an upper area 9 of the frame 1 to recliners 7 at a lower area 11 of the frame 1. Based on the analysis provided by the topological design software material thickness is provided only where necessary when the frame 1 is formed by the additive manufacturing process. Figures 2, 3, 4 show examples of the minimum material required to support force distribution through the frame 1 based on the analysis provided by the topological design software. Figure 3 is a partial perspective view of the frame 1 showing material 15 required on the outer surface 13 of the frame 1 to support force distribution through the frame 1. Figure 4 is a partial perspective view of the frame 1 with material 17 required on the inside of the frame 1 to support force distribution through the frame. The material 17 may be added to ribs 5 in a lower area of the frame 1 and material 19 may be provided to ribs 5 in an upper area 23 of the frame 1.

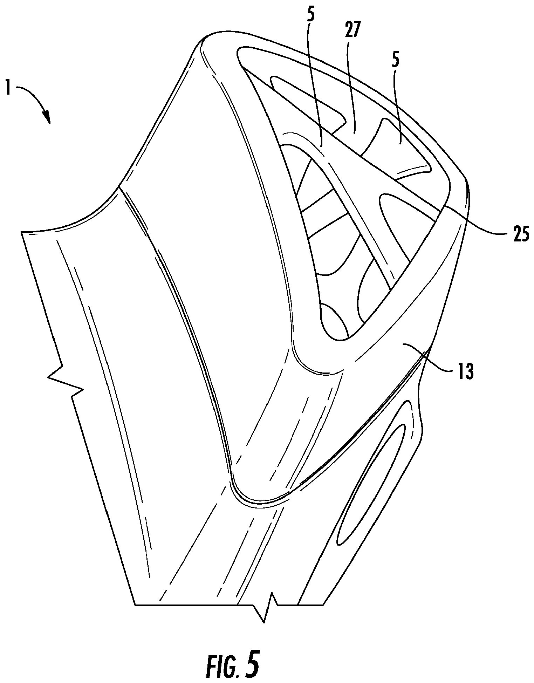

Figure 5 is a partial sectional view of the frame 1. The frame 1 includes the outer surface 13 and an inner surface 25. The inner surface structure 25 defines an interior space 27. A plurality of ribs 5 are provided in the interior space 27. The ribs 5 are formed in the interior space 27 via the additive manufacturing process.

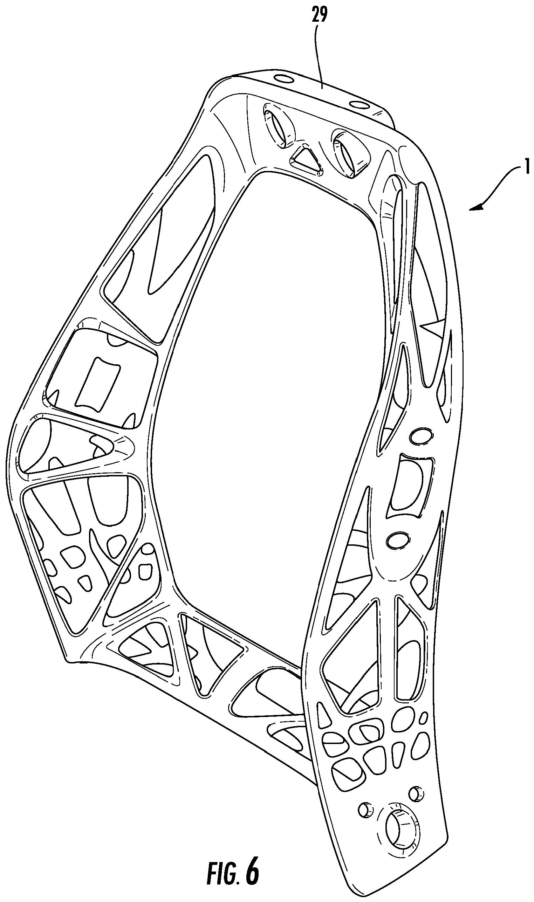

Figure 6 is another perspective view of the frame 1. The frame 1 has a headrest mounting structure 29 for mounting a headrest to the frame 1. The headrest mounting structure 29 is formed via the additive manufacturing process.

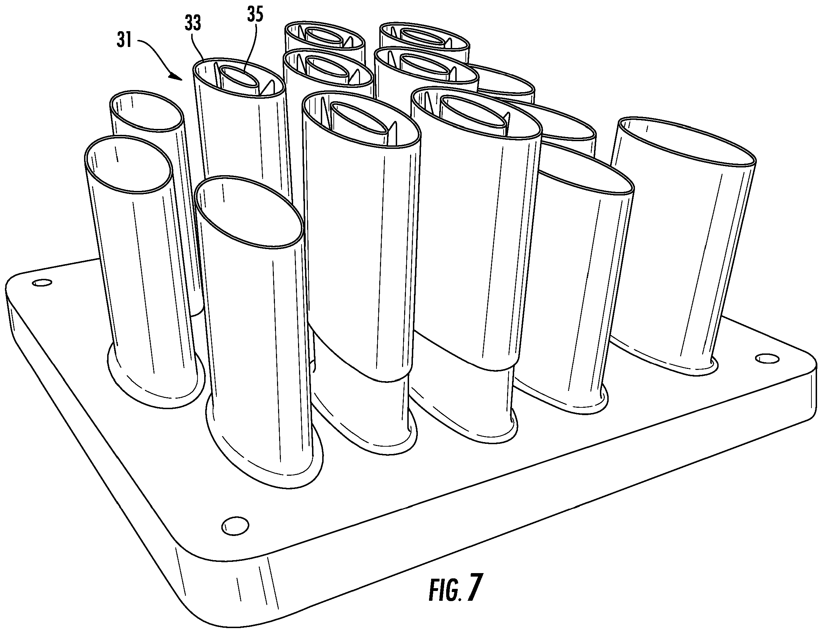

Figure 7 is a perspective view of a plurality of components 31. The plurality of components are used to form the frame 1. The components 31 may be used to form the seat cushion or the combination of the seat back structure and the seat cushion. The seat back structure and the seat cushion may form a shell. Each of the components 31 has an outer component 33 and an inner component 35.

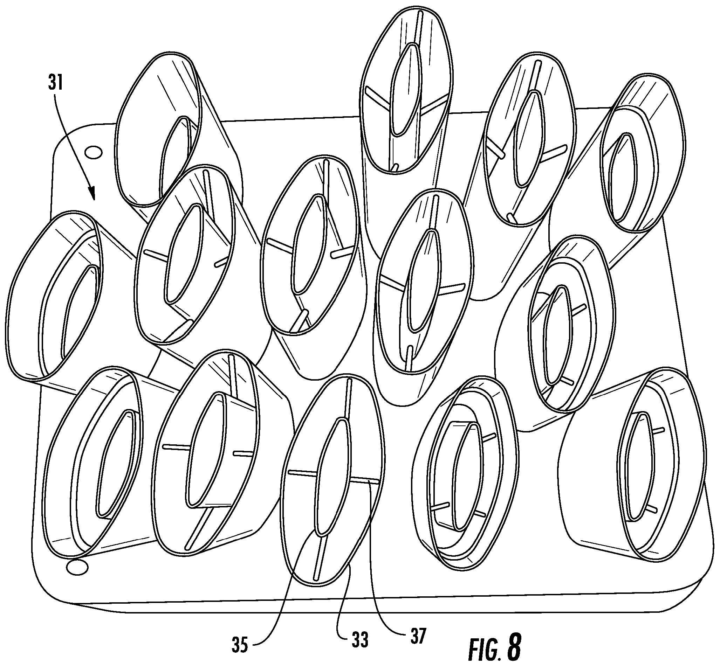

Figure 8 is a top view of the plurality of components 31. The outer component 33 and the inner component 35 are connected by a plurality of support structures 37. The support structures 37 may include the plurality of ribs 5. The outer component 33 may be formed of a 1 mm. thin shelled outer wall. The inner component 35 may be formed of a thin shelled inner wall. The outer component 33 and the inner component 35 are formed via the additive manufacturing process.

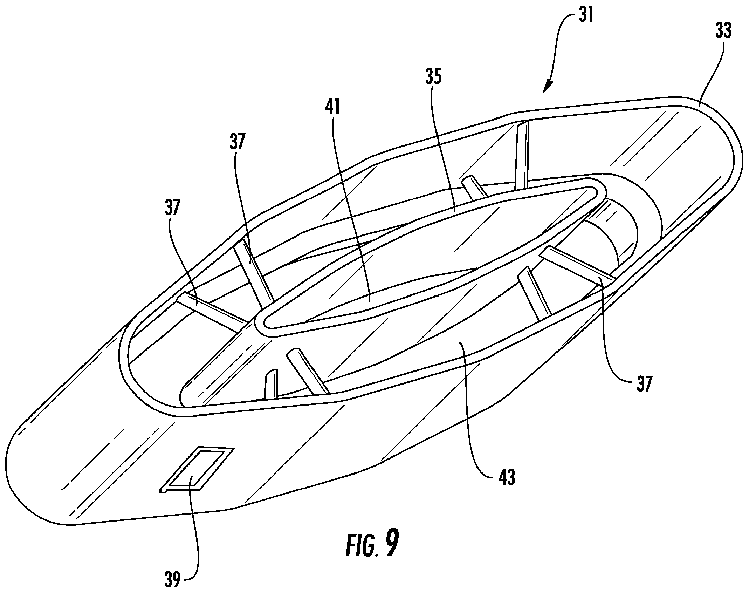

Figure 9 is a cross sectional view of one of the components 31, which is representative of the structure of each of the components 31. The outer component 33 and the inner component 35 define a channel 43. The outer component includes an opening 39. Fluid, such as air, passes through the channel 43 and exits via the opening 39. The fluid may be heated or cooled. The inner component 35 has an inner component channel 41. Electrical wires, including wire harnesses, may extend through the inner component channel 41 such that the electrical wires, including wire harnesses, are connected to the seat back structure 1. The inner component 35 protects the wire harnesses from being damaged

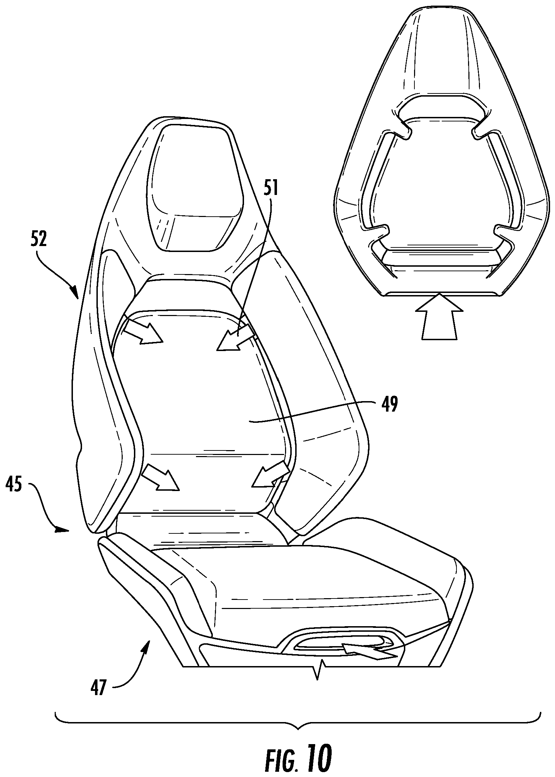

Figure 10 is a perspective view of a seat 45. The seat 45 includes a seat back structure 52 and a seat cushion 47. The seat back structure 52 is connected to an occupant support structure 49. The frame 1 shown in Figures 1-9 is used to form one or more of the seat back structure 52 and the seat cushion 47. Fluid is delivered in a direction of the occupant support structure 49 via a fluid flow path 51. The fluid flow path 51 is defined by the seat back structure 1.

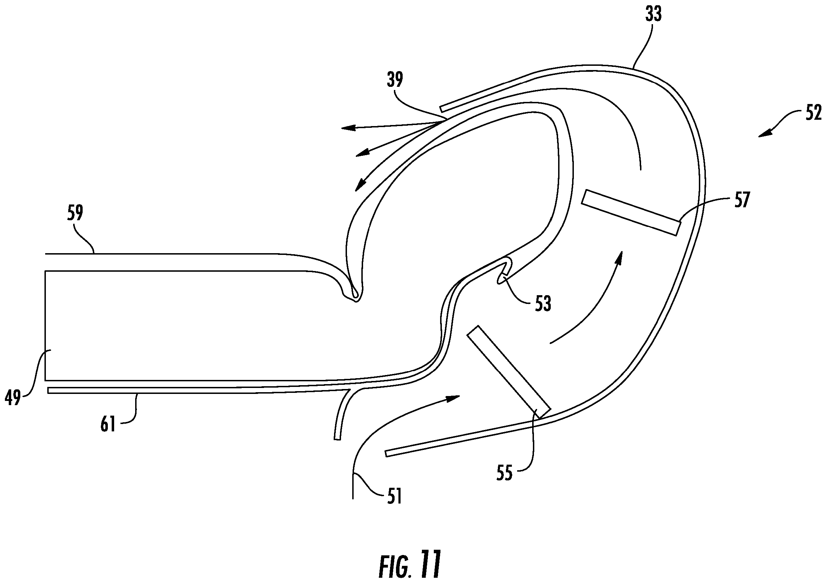

Figure 11 is cross sectional view of a portion of the seat 45 of Figure 10. Fluid is delivered in the direction of the occupant support structure 49 by the fluid flow path 51, which includes the opening 39. Fluid passes along the fluid flow path 51 and exits the seat back structure 52 via the opening 39 in the direction of the occupant support structure 49. A charging grid element 55 and an attracting grid 57 are arranged in the fluid flow path 51. The occupant support structure 49 is connected to the seat back structure 52 via one or more occupant support structure attachment elements 53. The one or more occupant support structure attachment elements 53 may be formed on the seat back structure 52. In another embodiment, the one or more occupant support structure attachment elements 53 may be formed on the occupant support structure 49. The occupant support structure attachment elements 53 may be in the form of internal trim attachment hooks. A trim cover 59 covers the occupant support structure 49. A support element 61 supports the occupant structure 49.

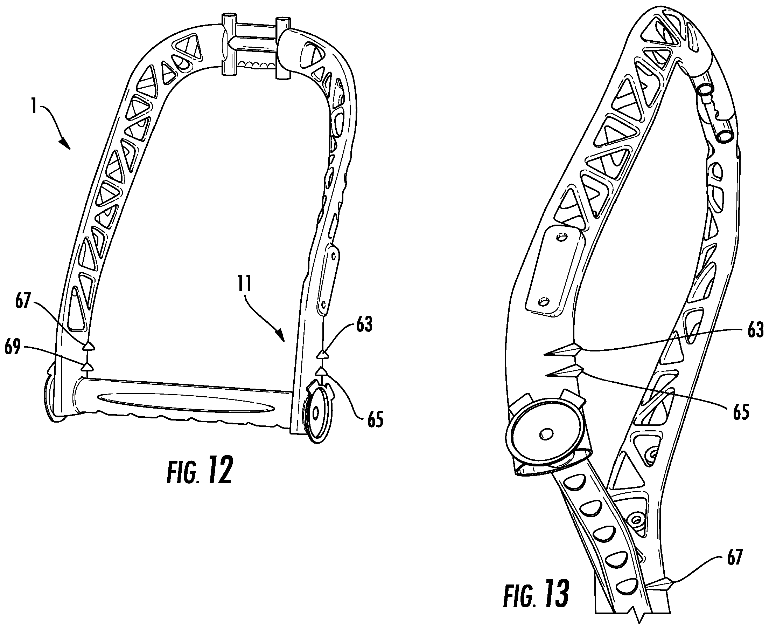

Figure 12 is yet another perspective view of the frame 1. The frame 1 includes structural elements 63, 65, 67, 69. The structural elements 63, 65, 67, 69 may be in the form of gussets or darts. The structural elements 63, 65, 67, 69 are provided in the lower area 11 of frame 1. The structural elements 63, 65, 67, 69 are printed on as structural fusible links during the additive manufacturing process. When the structural elements 63, 65, 67, 69 are subjected to a shock load, such as when the frame 1 is in a vehicular accident, the structural elements 63, 65, 67, 69 buckle. The additive manufacturing process allows for variations in thickness of the structural elements 63, 65, 67, 69, including a wall thickness of the structural elements 63, 65, 67, 69, to create one or more tunable buckle zones. It is understood that any number of structural elements may be provided.

Figure 13 is a lower perspective view of the frame 1 that includes the structural elements 63, 65, 67, 69.

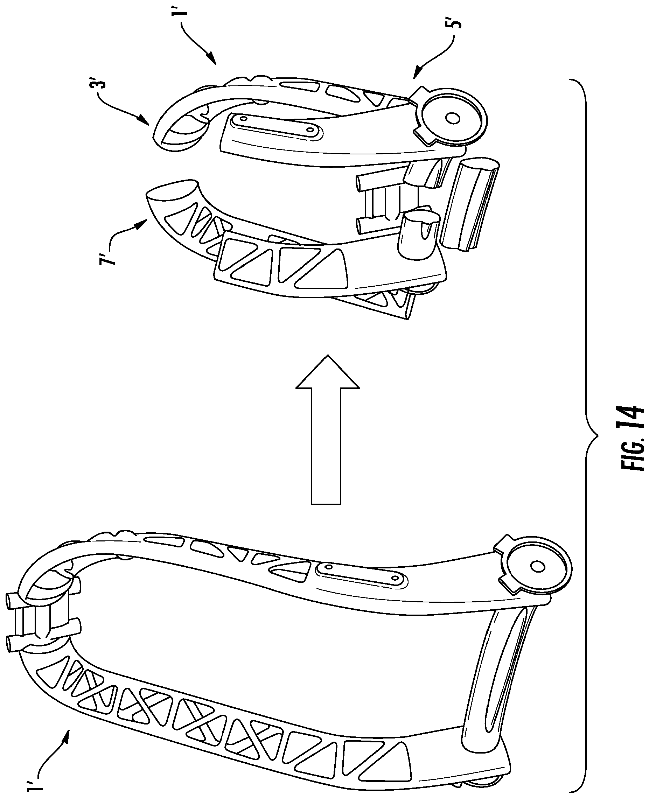

Figure 14 is a perspective view of another embodiment of a frame 1'. The frame 1' may form a seat back, a seat cushion or a combination of the seat back and the seat cushion to form a shell. Instead of being formed as a single, one-piece structure, the frame 1' is formed of at least a plurality of frame components 3', 5', 7'. It understood that the frame 1' may be formed of at least two frame components, but any number of frame components may be used. Each of the frame components 3', 5', 7' are formed via the additive manufacturing process, such as the three-dimensional printing process, and each of the frame components 3', 5', 7' are connected to each other to form the frame 1'. This makes it less expensive to form the frame 1' since it reduces print time of the additive manufacturing process and maximizes material usage. In another embodiment, attachment features, such as snap elements and interlock elements are printed into the structure of the frame components 3', 5', 7' via a 3-D printing process (additive manufacturing process). The snap elements and the interlock elements allow the frame components 3', 5', 7' to be connected to each other to form the frame 1'. In another embodiment, the frame components 3', 5', 7' can be bonded together in many ways, such as welding or adhesive bonding.

## Claims

1. A seat (45), comprising:
a structural frame (1, 1') comprising one or more thin walled complex geometry structures (3, 3'), said one or more thin walled complex geometry structures (3, 3') comprising one or more of multiple internal channels (41, 43) and ribs (5), said one or more of multiple channels (41, 43) and ribs (5) defining a structure for supporting elements within said structural frame (1, 1'), said one or more of said multiple channels (41, 43) and said ribs (5) defining one or more of structural loading paths and a channel (43) for one or more of transporting fluids and receiving one or more components (31), wherein said structural frame (1, 1') comprises one or more of a seat back and a cushion frame comprising additive manufacturing material, said one or more thin walled complex geometry structures (3, 3') comprising non-castable and non-machinable portions.

2. A seat (45) in accordance with claim 1, wherein said structure for supporting elements within said structural frame (1, 1') comprises a first component (33) and a second component (35), said first component defining an interior space (27), said second component being located in said interior space (27).

3. A seat (45) in accordance with one or more of claims 1-2, wherein said first component (33) is connected to said second component (35) via said ribs (5).

4. A seat (45) in accordance with one or more of claims 1 - 3, wherein said first component (33) and said second component (35) define said channel (41, 43), said second component (35) comprising a second component channel (41).

5. A seat (45) in accordance with one or more of claims 1-4, wherein said channel (43) defines a fluid flow path (51), wherein a wire harness is arranged in said second component channel (41).

6. A seat (45) in accordance with one or more of claims 1-5, wherein the structural frame (1, 1') is formed in one piece by an additive manufacturing process.

7. A seat (45) in accordance with claim 6, wherein the structural frame (1, 1') is formed in one piece by a three-dimensional printing process.

## Patentansprüche

1. Sitz (45), umfassend:
einen Strukturrahmen (1, 1'), der eine oder mehrere dünnwandige Strukturen mit komplexer Geometrie (3, 3') umfasst, wobei die eine oder mehreren dünnwandigen Strukturen mit komplexer Geometrie (3, 3') eines oder mehrere von mehreren internen Kanälen (41, 43) und Rippen (5) umfassen, wobei das eine oder die mehreren von mehreren Kanälen (41, 43) und Rippen (5) eine Struktur zum Tragen von Elementen innerhalb des Strukturrahmens (1, 1') definieren, wobei das eine oder die mehreren von den mehreren Kanälen (41, 43) und den Rippen (5) eines oder mehrere von strukturellen Ladewegen und einem Kanal (43) für eines oder mehrere von Befördern von Fluiden und Aufnehmen einer oder mehrerer Komponenten (31) definieren, wobei der Strukturrahmen (1, 1') eines oder mehrere von einem Sitzrücken und einem Kissenrahmen umfasst, der additive-Fertigung-Material umfasst, wobei die eine oder mehreren dünnwandigen Strukturen mit komplexer Geometrie (3, 3') nicht-gießbare und nicht maschinell bearbeitbare Abschnitte umfassen.

2. Sitz (45) gemäß Anspruch 1, wobei die Struktur zum Tragen von Elementen innerhalb des Strukturrahmens (1, 1') eine erste Komponente (33) und eine zweite Komponente (35) umfasst, wobei die erste Komponente einen Innenraum (27) definiert, wobei die zweite Komponente in dem Innenraum (27) angeordnet ist.

3. Sitz (45) gemäß einem oder mehreren der Ansprüche 1-2, wobei die erste Komponente (33) über die Rippen (5) mit der zweiten Komponente (35) verbunden ist.

4. Sitz (45) gemäß einem oder mehreren der Ansprüche 1-3, wobei die erste Komponente (33) und die zweite Komponente (35) den Kanal (41, 43) definieren, wobei die zweite Komponente (35) einen Zweite-Komponente-Kanal (41) umfasst.

5. Sitz (45) gemäß einem oder mehreren der Ansprüche 1-4, wobei der Kanal (43) einen Fluidflussweg (51) definiert, wobei in dem Zweite-Komponente-Kanal (41) ein Kabelstrang angeordnet ist.

6. Sitz (45) gemäß einem oder mehreren der Ansprüche 1-5, wobei der Strukturrahmen (1, 1') durch ein additives Fertigungsverfahren in einem Stück hergestellt ist.

7. Sitz (45) gemäß Anspruch 6, wobei der Strukturrahmen (1, 1') durch ein dreidimensionales Druckverfahren in einem Stück hergestellt ist.

## Revendications

1. Siège (45), comprenant :
un cadre structurel (1, 1') comprenant une ou plusieurs structures de géométrie complexe à paroi mince (3, 3'), lesdites une ou plusieurs structures de géométrie complexe à paroi mince (3, 3') comprenant un ou plusieurs de multiples canaux internes (41, 43) et des nervures (5), lesdits un ou plusieurs de multiples canaux (41, 43) et lesdites nervures (5) définissant une structure pour supporter des éléments à l'intérieur dudit cadre structurel (1, 1'), lesdits un ou plusieurs desdits multiples canaux (41, 43) et lesdites nervures (5) définissant un ou plusieurs de chemins de chargement structurels et un canal (43) pour un ou plusieurs de fluides de transport et recevant un ou plusieurs composants (31), dans lequel ledit cadre structurel (1, 1') comprend un ou plusieurs d'un dossier de siège et d'un cadre de coussin comprenant un matériau de fabrication additive, lesdits une ou plusieurs structures de géométrie complexe à paroi mince (3, 3') comprenant des portions non moulables et non usinables.

2. Siège (45) selon la revendication 1, dans lequel ladite structure pour supporter des éléments à l'intérieur dudit cadre structurel (1, 1') comprend un premier composant (33) et un second composant (35), ledit premier composant définissant un espace intérieur (27), ledit second composant étant situé dans ledit espace intérieur (27).

3. Siège (45) selon une ou plusieurs des revendications 1 et 2, dans lequel ledit premier composant (33) est raccordé audit second composant (35) par l'intermédiaire desdites nervures (5).

4. Siège (45) selon une ou plusieurs des revendications 1 à 3, dans lequel ledit premier composant (33) et ledit second composant (35) définissent ledit canal (41, 43), ledit second composant (35) comprenant un canal de second composant (41).

5. Siège (45) selon une ou plusieurs des revendications 1 à 4, dans lequel ledit canal (43) définit un chemin d'écoulement de fluide (51), dans lequel un faisceau de fils est agencé dans ledit second composant canal (41).

6. Siège (45) selon une ou plusieurs des revendications 1 à 5, dans lequel le cadre structurel (1, 1') est formé en une pièce par un procédé de fabrication additive.

7. Siège (45) selon la revendication 6, dans lequel le cadre structurel (1, 1') est formé en une pièce par un procédé d'impression tridimensionnelle.
